# EUROPEAN PATENT APPLICATION

(11) **EP 4 799 912 A1**
(43) Date of publication of application: **02.09.2026**
(21) Application number: 26157780.3
(22) Date of filing: 11.02.2026
(51) Int. Cl.: B62D 25/08

(54) **REAR STRUCTURE OF VEHICLE BODY**

(30) Priority: 28.02.2025 JP 2025031402
(71) Applicant: MAZDA MOTOR CORPORATION, Hiroshima 730-8670 (JP)
(72) Inventor: Domen, Masaya, Aki-gun, Hiroshima, 730-8670 (JP); Eguchi, Kosuke, Aki-gun, Hiroshima, 730-8670 (JP); Motonaga, Wataru, Aki-gun, Hiroshima, 730-8670 (JP); Hirakawa, Takashi, Aki-gun, Hiroshima, 730-8670 (JP); Yamada, Ken, Aki-gun, Hiroshima, 730-8670 (JP); Izumi, Yohei, Aki-gun, Hiroshima, 730-8670 (JP)
(74) Representative: Lorenz Seidler Gossel Part. mbB

(57) **Abstract**

To provide a rear structure of a vehicle body capable of suppressing torsional deformation that is associated with input of an upward load from a rear damper during travel, a rear structure of a vehicle body (1) includes a front brace (17) which is provided to have a lower end portion joined to an end portion of a rear cross member (16) in a vehicle width direction and extend upward along an inner surface of a wheelhouse inner (10), and at least an upper end portion of which is joined to the wheelhouse inner (10). In the rear structure of the vehicle body (1), the front brace (17) constitutes a load transmission path (L3) through which an upward load input to an attachment portion (P1) of a rear suspension is transmitted to a rear cross member (16).

## Description

The present invention relates to a rear structure of a vehicle body and, in particular, to a peripheral structure of a rear suspension housing in a rear portion of the vehicle body.

A rear portion of a vehicle body is required to have high rigidity against torsional deformation in order to ensure high steering stability and suppress vibration. In particular, in electric vehicles (BEV), hybrid electric vehicles (HEV), and the like, it is important to suppress the torsional deformation that is associated with input of an upward load from a rear suspension (rear damper) during travel due to an increase of vehicle weight caused by mounting an electric component for travel, such as a large-capacity battery or motor. A technique for improving the rigidity of the rear portion of the vehicle body is disclosed in JP2023-150802A.

In JP2023-150802A, a configuration in which a body portion constituting a rear-side inner panel includes a framework portion is disclosed. The framework portion is an upper end portion of the rear-side inner panel, and is disposed along a lower edge of a window in a manner to extend in a front-rear direction of the vehicle body from a quarter pillar toward a rear pillar.

In the technique disclosed in JP2023-150802A, the framework portion of the rear-side inner panel is provided, thereby attempting to secure rigidity of the rear-side inner panel and suppress generation of vibration and noise.

It is considered that the rigidity of the rear portion of the vehicle body can be improved to a certain extent by the vehicle body structure disclosed in Patent Literature 1. However, it is also considered that, in order to be compatible with a heavy vehicle such as the electric vehicle, it is necessary to further improve the rigidity of the rear portion of the vehicle body against the torsional deformation of the vehicle body.

The invention has been made to solve the problem as described above and therefore has an object of providing a rear structure of a vehicle body capable of suppressing torsional deformation that is associated with input of an upward load from a rear damper during travel.

A rear structure of a vehicle body according to an aspect of the invention includes a wheelhouse inner, a rear suspension housing, a housing gusset, a rear cross member, and a reinforcing member. The wheelhouse inner is provided on an inner side of a rear wheel in a vehicle width direction. A rear suspension is attached to the rear suspension housing. The housing gusset is provided to cover an attachment portion of the rear suspension in the rear suspension housing. The rear cross member is provided to extend in the vehicle width direction in a portion in front of the housing gusset in a front-rear direction. The reinforcing member is provided to have a lower end portion joined to an end portion of the rear cross member in the vehicle width direction and extend upward along an inner surface of the wheelhouse inner, and at least an upper end portion thereof is joined to the wheelhouse inner.

In the rear structure of the vehicle body according to this aspect, the reinforcing member constitutes a load transmission path through which an upward load input to the attachment portion is transmitted to the rear cross member.

In the rear structure of the vehicle body according to the above aspect, the reinforcing member constitutes the load transmission path. Accordingly, in a rear portion of the vehicle body, the upward load, which is input to the attachment portion of the suspension housing, is transmitted to the rear cross member through the load transmission path. Therefore, the rear structure of the vehicle body according to the above aspect can improve rigidity against torsional deformation of the vehicle body by releasing the upward load to the rear cross member through the load transmission path.

In the rear structure of the vehicle body according to the above aspect, a part of the upper end portion of the reinforcing member may be joined to a lower portion of the housing gusset.

In the rear structure of the vehicle body according to the above aspect, since the upper end portion of the reinforcing member is joined not only to the wheelhouse inner but also to the housing gusset, the upward load is transmitted from the reinforcing member to the rear cross member with a small loss. Therefore, the rear structure of the vehicle body according to the above aspect is favorable for improving the rigidity against the torsional deformation of the vehicle body.

In the rear structure of the vehicle body according to the above aspect, the upper end portion of the reinforcing member is joined to the lower portion of the housing gusset. In other words, compared to a case where the upper end portion of the reinforcing member extends to the same height level as or a position above an upper end portion of the housing gusset, the rear structure of the vehicle body according to the above aspect can hinder transmission of vibration of a rear door. The present inventors confirmed this by the configuration in which the upper end portion of the reinforcing member extended to the same height level as or the position above the upper end portion of the housing gusset. As a result, it was confirmed that the vibration of the rear door was easily transmitted to a quarter pillar and a portion behind it. From such a confirmation result, in the rear structure of the vehicle body according to the above aspect, the upper end portion of the reinforcing member is set to be a lower position than the upper end portion of the housing gusset, and it is thus possible to suppress the vibration of the rear door from being transmitted to the quarter pillar and the portion behind it while improving the rigidity against the torsional deformation.

In the rear structure of the vehicle body according to the above aspect, the reinforcing member may have a hat cross-sectional shape.

In the rear structure of the vehicle body according to the above aspect, since the reinforcing member having the hat cross-sectional shape is adopted, it is possible to suppress increases in vehicle body weight and manufacturing cost in comparison with a case where a reinforcing member formed by a solid rod or the like is adopted.

The rear structure of the vehicle body according to the above aspect may further include a side panel that is provided to join an upper end portion of the wheelhouse inner and respective parts of a roof side rail and a rear pillar. In addition, the housing gusset may have, in a front portion, a gusset bulging portion provided to bulge inwardly in the vehicle width direction and extend upward. In this case, the gusset bulging portion may constitute a second load transmission path through which the upward load input to the attachment portion is transmitted from the housing gusset to the roof side rail via the side panel.

Since the rear structure of the vehicle body according to the above aspect includes the second load transmission path that is formed by the gusset bulging portion, the upward load is transmitted not only through the load transmission path described above but also from the side panel to the roof side rail through the second load transmission path. Therefore, the rear structure of the vehicle body according to the above aspect is favorable for improving the rigidity against the torsional deformation of the vehicle body.

In the rear structure of the vehicle body according to the above aspect, the reinforcing member may be provided at a position that is spaced apart from the gusset bulging portion in the front-rear direction, and may be provided to extend linearly in a side view.

In the rear structure of the vehicle body according to the above aspect, the reinforcing member is provided separately from the gusset bulging portion in the front-rear direction and to extend linearly in the side view. That is, in the rear structure of the vehicle body according to the above aspect, the load transmission path and the second load transmission path are not continuous, and the load transmission path is formed linearly. In the case where an upper portion of the load transmission path is curved toward a rear portion of the vehicle body in the side view so as to be continuous with the second load transmission path, it is considered that energy loss is increased in the curved portion of the load transmission path. Accordingly, in the rear structure of the vehicle body according to the above aspect, the reinforcing member is provided separately from the gusset bulging portion in the front-rear direction and to extend linearly in the side view, and it is thus further favorable for improving the rigidity against the torsional deformation by suppressing the energy loss during load transmission.

The rear structure of the vehicle body according to the above aspect may further include a rear frame and a second reinforcing member. The rear frame is joined to the wheelhouse inner on an outer side of a rear floor panel in the vehicle width direction and is provided to extend in the front-rear direction. The second reinforcing member is provided to have a lower end portion joined to the rear frame and extend upward along an inner surface of the wheelhouse inner, and an upper end portion thereof is joined to the housing gusset.

In the rear structure of the vehicle body according to this aspect, the second reinforcing member may constitute a third load transmission path through which the upward load input to the attachment portion is transmitted from a rear portion of the housing gusset to the rear frame.

Since the rear structure of the vehicle body according to the above aspect includes the third load transmission path that is formed by the second reinforcing member, the upward load input to the attachment portion can also be transmitted to the rear frame. Therefore, the rear structure of the vehicle body according to the above aspect is further favorable for improving the rigidity against the torsional deformation of the vehicle body.

The rear structure of the vehicle body according to the above aspect may further include the side panel. The side panel is provided to join the wheelhouse inner and the respective parts of the roof side rail and the rear pillar.

In the rear structure of the vehicle body according to the above aspect, a rear header corner portion, to which a rear header disposed to extend along an upper edge portion of a rear opening is joined, may be provided in a joint portion between the roof side rail and the rear pillar.

Furthermore, in the rear structure of the vehicle body according to the above aspect, the wheelhouse inner may have a wheelhouse bulging portion provided to bulge inwardly in the vehicle width direction and extend upward from the rear portion of the housing gusset, and the side panel may have a side panel bulging portion provided to bulge outward in the vehicle width direction and connect an upper end of the wheelhouse bulging portion and the rear header corner portion.

In the rear structure of the vehicle body according to this aspect, the wheelhouse bulging portion and the side panel bulging portion may constitute a fourth load transmission path through which the upward load input to the attachment portion is transmitted from the rear portion of the housing gusset to the rear header corner portion.

Since the rear structure of the vehicle body according to the above aspect includes the fourth load transmission path that is formed by the wheelhouse bulging portion and the side panel bulging portion, the upward load that is input to the attachment portion can also be transmitted to the rear header corner portion that is formed to have relatively high rigidity. Therefore, the rear structure of the vehicle body according to the above aspect is further favorable for improving the rigidity against the torsional deformation of the vehicle body.

### [Advantageous Effects of Invention]

The rear structure of the vehicle body according to each of the above aspects can suppress the torsional deformation that is associated with the input of the upward load from the rear damper during the travel.

### Brief Description of Drawings:

FIG. 1 is a perspective view in which a rear portion of a vehicle body according to an embodiment of the invention is viewed from a vehicle inner side.
FIG. 2 is an enlarged side view of a housing gusset and a peripheral portion thereof.
FIG. 3 is a side view in which a side panel is viewed from a vehicle outer side.
FIG. 4 is a view illustrating load transmission paths that are formed in the rear portion of the vehicle body.

A description will hereinafter be made on an embodiment of the invention with reference to the drawings. The invention will be exemplified in the embodiment described below, and the invention is not limited to the following embodiment except for an essential configuration thereof.

In the drawings used in the following description, "FR" indicates a vehicle body front direction, "RR" indicates a vehicle body rear direction, "LH" indicates a vehicle body left direction, "RH" indicates a vehicle body right direction, "UP" indicates a vehicle body up direction, and "LO" indicates a vehicle body down direction.

### 1. Structure of Rear Portion 1a in Vehicle Body 1

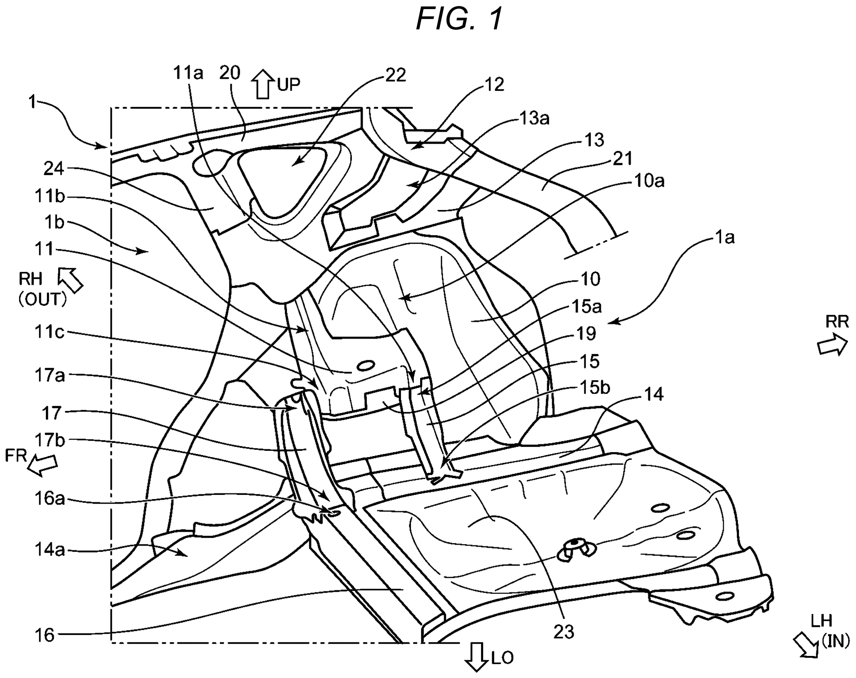

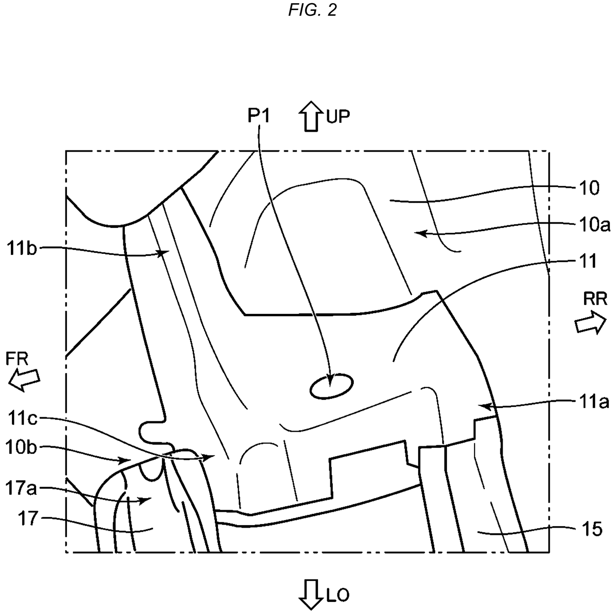

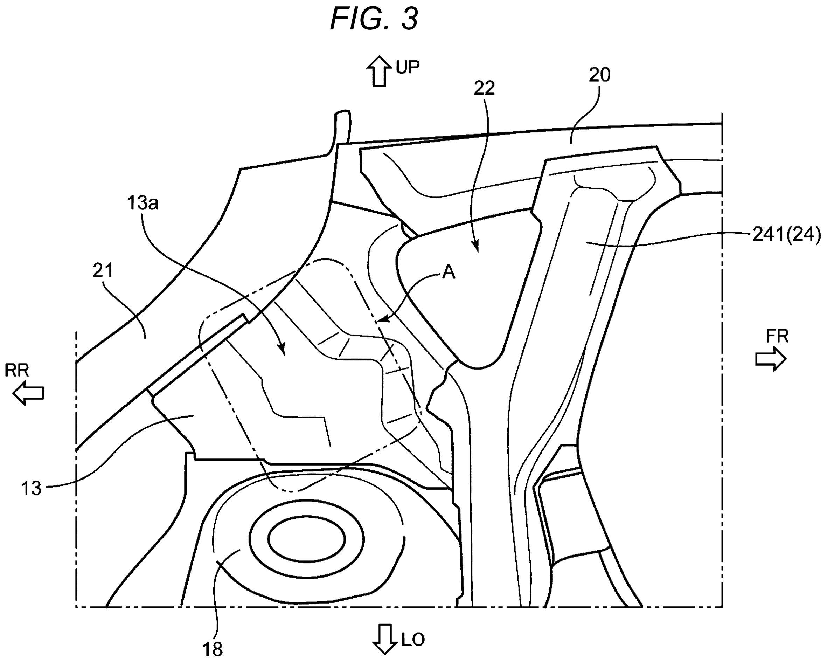

As an example, a vehicle body 1 according to the present embodiment is a vehicle body of an electric vehicle (BEV). A description will be made on a structure of a rear portion 1a in the vehicle body 1 according to the present embodiment with reference to FIGs. 1 to 3. FIG. 1 is a perspective view illustrating a right portion of the rear portion 1a in the vehicle body 1 viewed from a vehicle inner side. FIG. 2 is an enlarged side view of a housing gusset 11 and a peripheral portion thereof. FIG. 3 is a side view illustrating a side panel 13 viewed from a vehicle outer side.

As illustrated in FIG. 1, the vehicle body 1 includes, in the rear portion 1a, a wheelhouse inner 10, a rear suspension housing 19, the housing gusset 11, a rear cross member (#4 cross member) 16, and a front brace 17 as a reinforcing member. The wheelhouse inner 10 is a member that is provided to bulge to a cabin inner side of a member constituting a wheelhouse for accommodating a rear wheel. In other words, the wheelhouse inner 10 is a member that is provided on an inner side of the rear wheel in a vehicle width direction. As illustrated in FIG. 3, a wheelhouse outer 18 is provided on an outer side of the rear wheel in the vehicle width direction. The wheelhouse includes the wheelhouse inner 10 and the wheelhouse outer 18.

As illustrated in FIGs. 1 and 2, the wheelhouse inner 10 has a wheelhouse bulging portion 10a above a rear portion of the housing gusset 11, the wheelhouse bulging portion 10a being provided to bulge inwardly in the vehicle width direction and extend in the up-down direction. The wheelhouse bulging portion 10a has higher rigidity than a region around the wheelhouse bulging portion 10a in the wheelhouse inner 10.

The rear suspension housing 19 is a member to which a rear suspension coupled to the rear wheel is attached, and has an attachment portion (a portion denoted by a reference numeral P1 in FIG. 2) to which the rear suspension is attached. In the vehicle body 1 according to the present embodiment, the wheelhouse inner 10 is provided to extend to a position above the attachment portion P1 in the rear suspension housing 19.

The housing gusset 11 is a member that is provided to cover the attachment portion P1 in the rear suspension housing 19. The rear portion of the housing gusset 11 is superposed on a part of the wheelhouse inner 10, and the superposed portion thereof is joined to the wheelhouse inner 10. Similarly, a front portion of the housing gusset 11 is superposed on a part of the wheelhouse inner 10, and the superposed portion is joined to the wheelhouse inner 10.

In the front portion, the housing gusset 11 has a gusset bulging portion 11b that is provided to bulge inwardly in the vehicle width direction and extend to be higher than a height level of the attachment portion P1. The gusset bulging portion 11b has higher rigidity than a region around the housing gusset 11.

The rear cross member 16 is provided to extend in the vehicle width direction in a manner to connect right and left rear frames 14. On an outer side of a rear floor panel 23 in the vehicle width direction, the rear frame 14 is provided to be joined to the wheelhouse inner 10 and extend in the front-rear direction. The rear frame 14 has, in a front portion, a kick-up portion 14a provided such that a height position thereof is lowered to the front, and a front end portion of the kick-up portion 14a is joined to a side sill (not illustrated).

An end portion 16a in the vehicle width direction of the rear cross member 16 is joined to the rear frame 14, and a lower portion thereof is joined to the rear floor panel 23. Although not illustrated in detail, the rear cross member 16 is a framework member that has a hat cross-sectional shape.

The front brace 17 is the elongated reinforcing member that has a hat cross-sectional shape, and is provided to extend in the up-down direction in a manner to connect each of the rear frame 14 and the rear cross member 16 to the wheelhouse inner 10. As illustrated in FIGs. 1 and 2, the front brace 17 is joined to a front portion 10b of the wheelhouse inner 10, and an upper end portion 17a thereof is joined to a front lower portion 11c of the housing gusset 11. The upper end portion 17a of the front brace 17 and the front lower portion 11c of the housing gusset 11 are superposed on each other, and the superposed portions are joined to each other.

A lower end portion 17b of the front brace 17 is joined to the rear cross member 16 and the rear frame 14.

The vehicle body 1 according to the present embodiment includes, in the rear portion 1a, a rear brace 15 as a second reinforcing member, a side panel 13, a roof side rail 20, a rear pillar 21, and a quarter pillar 24. The rear brace 15 as the second reinforcing member is provided to extend in the up-down direction in a manner to connect the rear frame 14 and the housing gusset 11. More specifically, the rear brace 15 is an elongated member having a hat cross-sectional shape, a lower end portion 15b thereof is joined to the rear frame 14, and an upper end portion 15a thereof is joined to a rear lower portion 11a of the housing gusset 11. That is, the rear brace 15 is the second reinforcing member that extends in the up-down direction and joins the rear portion of the housing gusset 11 and the rear frame 14.

The side panel 13 is a member that is provided to join an upper end portion of the wheelhouse inner 10 and respective parts of the roof side rail 20 and the rear pillar 21. A quarter window 22 is provided in a region that is surrounded by the roof side rail 20, the side panel 13, and the quarter pillar 24.

On both sides of a roof panel (not illustrated) in the vehicle width direction, the roof side rails 20 are provided to extend in the front-rear direction. The quarter pillar 24 has an upper end portion that is joined to the roof side rail 20, and is disposed along a rear edge of a rear door opening 1b. The rear pillar 21 is disposed to be inclined obliquely downward from a rear end of the roof side rail 20, and is disposed to extend along a side portion of a rear opening to which a rear hatch is attached.

A rear header (not illustrated) is connected to a joint portion between the roof side rail 20 and the rear pillar 21. A portion in which the roof side rail 20, the rear pillar 21, and the rear header are joined is referred to as a rear header corner portion 12. The rear header is disposed to connect the rear header corner portions 12 on both sides in the vehicle width direction and extend along an upper edge portion of the rear opening to which the rear hatch is attached.

As illustrated in a portion indicated by an arrow A in FIG. 3, the side panel 13 has a side panel bulging portion 13a that is provided to bulge outward in the vehicle width direction. The side panel bulging portion 13a is provided to extend along a lower edge of the quarter window 22, and is provided to connect an upper end of the wheelhouse bulging portion 10a and the rear header corner portion 12. The side panel bulging portion 13a has higher rigidity than a region around the side panel bulging portion 13a in the side panel 13.

### 2. Load Transmission Paths

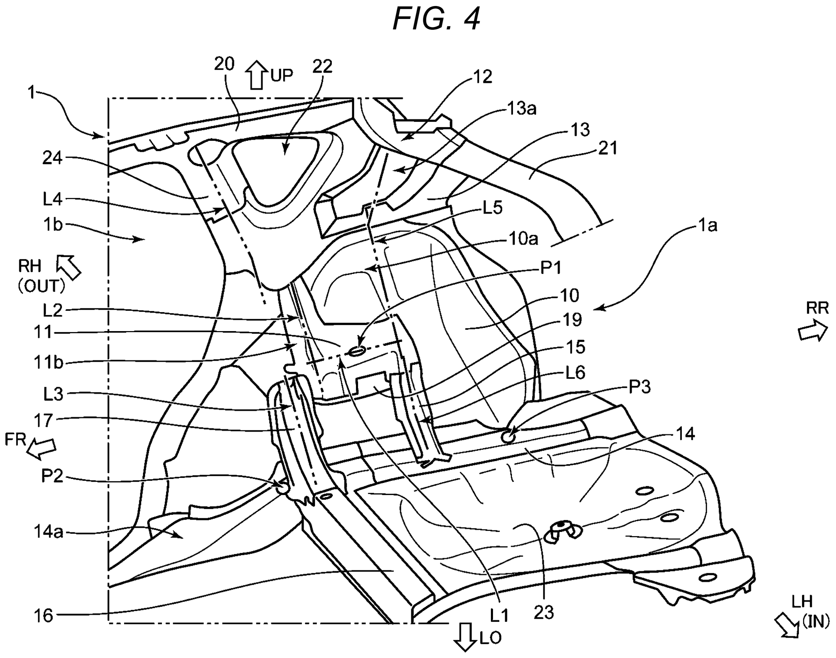

In the vehicle body 1 according to the present embodiment, the rear portion 1a is formed with load transmission paths through which an upward load, which is input from a rear damper to the attachment portion P1 of the rear suspension housing 19 during travel of the vehicle, is transmitted to the rear cross member 16 having the relatively high rigidity, and the like. The load transmission paths formed in the rear portion 1a of the vehicle body 1 will be described with reference to FIG. 4. FIG. 4 also illustrates only the right portion of the structure of the rear portion 1a in the vehicle body 1. However, a left portion of the rear portion 1a in the vehicle body 1 has a similar configuration.

As illustrated in FIG. 4, the front brace 17 as the reinforcing member constitutes a transmission path (load transmission path) L3 for an upward load that is input from the rear damper to the attachment portion P1 of the rear suspension housing 19 during the travel of the vehicle. That is, the front brace 17 constitutes the path (load transmission path) L3 through which the load, which is input to the attachment portion P1 and transmitted to a front portion of the housing gusset 11 through a path L1 of the housing gusset 11 during the travel of the vehicle, is transmitted to the rear cross member 16 as the framework member having the relatively high rigidity.

Here, although not illustrated in detail, the rear frame 14 has two points P2, P3 to each of which a trailing arm is coupled. The two coupling points P2, P3 are spaced apart from each other in the front-rear direction. Of the two coupling points P2, P3, the front point P2 is disposed in the kick-up portion 14a in front of a portion where the front brace 17 is disposed. That is, in the vehicle body 1 according to the present embodiment, the load transmission path L3 that is formed by the front brace 17 as the reinforcing member is disposed at a position between the two coupling points P2, P3 in the front-rear direction.

In the rear portion 1a of the vehicle body 1, the gusset bulging portion 11b provided in the front portion of the housing gusset 11 constitutes a path L2 through which the upward load input to the attachment portion P1 during the travel of the vehicle is transmitted to the side panel 13. In addition, a front portion of the side panel 13 and the quarter pillar 24 constitute a path L4 through which the load transmitted from the path L2, which is formed by the gusset bulging portion 11b, is transmitted to the roof side rail 20. In the rear portion 1a of the vehicle body 1, the path L2 and the path L4 constitute a second load transmission path.

Here, the gusset bulging portion 11b, which constitutes the path L2, and the front brace 17, which constitutes the load transmission path L3, are spaced apart from each other in the front-rear direction. Similarly, the gusset bulging portion 11b is provided such that the path L2 formed by the gusset bulging portion 11b and the path L4 formed by the front portion of the side panel 13 and the quarter pillar 24 are spaced apart from each other in the front-rear direction.

In the rear portion 1a of the vehicle body 1 according to the present embodiment, the rear brace 15 as the second reinforcing member constitutes a path (third load transmission path) L6 through which the upward load, which is input to the attachment portion P1 during the travel of the vehicle and transmitted to the rear portion of the housing gusset 11 through the path L1 of the housing gusset 11, is transmitted to the rear frame 14 as the framework member having the relatively high rigidity.

At a position between the two coupling points P2, P3 in the front-rear direction, the third load transmission path L6, which is formed by the rear brace 15, is connected to the rear frame 14.

Furthermore, the wheelhouse bulging portion 10a and the side panel bulging portion 13a constitute a fourth load transmission path L5 through which the upward load, which is input to the attachment portion P1 during the travel of the vehicle, is transmitted to the rear header corner portion 12 having the relatively high rigidity.

As it has been described so far, in the vehicle body 1 according to the present embodiment, the upward load, which is input to the attachment portion P1 during the travel of the vehicle, can be transmitted to the surrounding highly rigid members (the rear cross member 16, the roof side rail 20, the rear frame 14, and the rear header corner portion 12) through the paths L1 to L6.

### 3. Effects

In the structure of the rear portion 1a in the vehicle body 1 according to the present embodiment, the load transmission path L3 is formed by the front brace 17 as the reinforcing member. Accordingly, in the rear portion 1a of the vehicle body 1, the upward load, which is input to the attachment portion P1 of the rear suspension housing 19, is transmitted to the rear cross member 16 through the load transmission path L3. Therefore, in the vehicle body 1, the upward load, which is input to the attachment portion P1, is released to the rear cross member 16 through the load transmission path L3, and rigidity against torsional deformation of the vehicle body 1 can thereby be improved.

In the structure of the rear portion 1a in the vehicle body 1 according to the present embodiment, since the upper end portion 17a of the front brace 17 is joined not only to the front portion 10b of the wheelhouse inner 10 but also to the front lower portion 11c of the housing gusset 11, the upward load is transmitted from the front brace 17 to the rear cross member 16 with a small energy loss. Therefore, the structure of the rear portion 1a in the vehicle body 1 is favorable for improving the rigidity against the torsional deformation of the vehicle body 1.

In the vehicle body 1, the upper end portion 17a of the front brace 17 is arranged at substantially the same height position as the attachment portion P1 in the up-down direction. Accordingly, compared to a case where the upper end portion 17a of the front brace 17 extends to the same height level as or a position above the upper end portion of the housing gusset 11, it is possible to hinder transmission of vibration of a rear door. The present inventors confirmed this by the configuration in which the height position of the upper end portion 17a of the front brace 17 extended to the same height level as or the position above the upper end portion of the housing gusset 11. As a result, it was confirmed that the vibration of the rear door was easily transmitted to the quarter pillar 24 and a portion behind it. From such a confirmation result, in the structure of the rear portion 1a in the vehicle body 1 according to the present embodiment, the height position of the upper end portion 17a of the front brace 17 is set to a lower position than the upper end portion of the housing gusset 11, and thus the transmission of the vibration of the rear door to the quarter pillar 24 and the portion behind it can be suppressed while the rigidity against the torsional deformation is improved.

In the structure of the rear portion 1a in the vehicle body 1 according to the present embodiment, the front brace 17 having the hat cross-sectional shape is adopted. Thus, compared to a case where a front brace that is formed by a solid member (such as a rod member) is adopted, it is possible to suppress increases in vehicle body weight and manufacturing cost.

Since the structure of the rear portion 1a in the vehicle body 1 according to the present embodiment includes the second load transmission paths L2, L4 including the path L2, which is formed by the gusset bulging portion 11b, the upward load, which is input to the attachment portion P1, is transmitted not only through the load transmission path L3 but also from the side panel 13 through the second load transmission paths L2, L4 to the roof side rail 20 through the quarter pillar 24. Therefore, the structure of the rear portion 1a in the vehicle body 1 is favorable for improving the rigidity against the torsional deformation of the vehicle body 1.

The structure of the rear portion 1a in the vehicle body 1 according to the present embodiment is provided such that the load transmission path L3, which is formed by the front brace 17, is spaced apart from the path L2, which is formed by the gusset bulging portion 11b, in the front-rear direction and extends linearly in a side view. That is, the vehicle body 1 is configured such that the load transmission path L3 and the path L2 of the second load transmission paths L2, L4 are not continuous. Thus, the load transmission path L3 is formed linearly in the up-down direction and is not curved in the front-rear direction. Since the load transmission path L3 is formed just as described, compared to a case where the load transmission path L3 is curved in the front-rear direction in the side view and is continuous with the path L2 formed by the gusset bulging portion 11b, it is further favorable for improving the rigidity against the torsional deformation by suppressing the energy loss during the load transmission. That is, in the case where the load transmission path L3 is curved in the front-rear direction in the side view and is continuous with the path L2 formed by the gusset bulging portion 11b, it is considered that the energy loss during the load transmission is increased due to curvature of the load transmission path. On the contrary, in the present embodiment, since the load transmission path L3 is configured to extend linearly without being curved in the front-rear direction, it is further favorable for improving the rigidity against the torsional deformation by suppressing the energy loss during the load transmission.

Since the structure of the rear portion 1a in the vehicle body 1 according to the present embodiment includes the third load transmission path L6, which is formed by the rear brace 15 as the second reinforcing member, the upward load, which is input to the attachment portion P1, can also be transmitted to the rear frame 14. Therefore, the vehicle body 1 is further favorable for improving the rigidity against the torsional deformation of the vehicle body 1.

Since the structure of the rear portion 1a in the vehicle body 1 according to the present embodiment includes the fourth load transmission path L4, which is formed by the wheelhouse bulging portion 10a and the side panel bulging portion 13a, the upward load, which is input to the attachment portion P1, can also be transmitted to the rear header corner portion 12, which is formed to have the relatively high rigidity. Therefore, the vehicle body 1 is further favorable for improving the rigidity against the torsional deformation of the vehicle body 1.

As it has been described so far, the structure of the rear portion 1a in the vehicle body 1 according to the present embodiment can suppress the torsional deformation that is associated with the input of the upward load from the rear damper during the travel.

The vehicle body 1 according to the above embodiment adopts the configuration in which the upper end portion 17a of the front brace 17 is joined to the front lower portion 11c of the housing gusset 11. However, in the invention, the upper end portion 17a of the front brace 17 may not be joined to the front lower portion 11c of the housing gusset 11. In this case, the load only needs to be transmitted between the housing gusset 11 and the front brace 17 via the wheelhouse inner 10.

In the vehicle body 1 according to the above embodiment, the front brace 17 having the hat cross-sectional shape is provided as the reinforcing member. However, the invention is not limited thereto. For example, a solid rod-shaped member may be provided as the reinforcing member.

The vehicle body 1 according to the above embodiment includes the paths L4 to L6 for transmitting the load in addition to the load transmission path L3, which is formed by the front brace 17. However, the invention only needs to include a load transmission path that is at least formed by the reinforcing member (front brace 17).

In the vehicle body 1 according to the above embodiment, the front brace 17 is arranged separately from the gusset bulging portion 11b in the front-rear direction. However, in the invention, the front brace may not be spaced apart from the gusset bulging portion in the front-rear direction. For example, in the side view, the reinforcing member (front brace 17) may be provided at a position that matches the gusset bulging portion in the front-rear direction.

An example of the vehicle body 1 according to the above embodiment is a hatchback-type vehicle body. However, the invention is not limited thereto. For example, the rear structure in the invention can also be applied to a sedan-type vehicle body or a coupe-type vehicle body. The same effects as described above can be achieved in such a case.

The vehicle body 1 according to the above embodiment is used as the vehicle body of the electric vehicle. However, the invention is not limited thereto. It may be used as a vehicle body of a hybrid electric vehicle or a vehicle body of an engine vehicle. The same effects as described above can be achieved in such a case.

### Reference Signs List:

1: vehicle body
1a: rear portion
10: wheelhouse inner
10a: wheelhouse bulging portion
11: housing gusset
11b: gusset bulging portion
12: rear header corner portion
13: side panel
13a: side panel bulging portion
15: rear brace (second reinforcing member)
17: front brace (reinforcing member)
20: roof side rail
24: quarter pillar

## Claims

1. A rear structure of a vehicle body (1) comprising: a wheelhouse inner (10) provided on an inner side of a rear wheel in a vehicle width direction; a rear suspension housing (19) to which a rear suspension is attached; a housing gusset (11) provided to cover an attachment portion (P1) of the rear suspension in the rear suspension housing (19); a rear cross member (16) provided at a front side of the housing gusset (11) in a front-rear direction in a manner to extend in the vehicle width direction; and a reinforcing member (17) which is provided to have a lower end portion (17b) joined to an end portion (16a) of the rear cross member (16) in the vehicle width direction and extend upward along an inner surface of the wheelhouse inner (10), and at least an upper end portion (17a) of which is joined to the wheelhouse inner (10), wherein the reinforcing member (17) constitutes a load transmission path through which an upward load input to the attachment portion (P1) is transmitted to the rear cross member (16).

2. The rear structure of the vehicle body according to claim 1, wherein a portion of the upper end portion (17a) of the reinforcing member (17) is joined to a lower portion (11c) of the housing gusset (11).

3. The rear structure of the vehicle body according to claim 1, wherein the reinforcing member (17) has a hat cross-sectional shape.

4. The rear structure of the vehicle body according to claim 1 further comprising: a side panel (13) provided to join an upper end portion of the wheelhouse inner (10) and respective parts of a roof side rail (20) and a rear pillar (21), wherein the housing gusset (11) has, in a front portion, a gusset bulging portion (11b) provided to bulge inwardly in the vehicle width direction and extend upward, and the gusset bulging portion (11b) constitutes a second load transmission path through which the upward load input to the attachment portion (P1) is transmitted from the housing gusset (11) to the roof side rail (20) via the side panel (13).

5. The rear structure of the vehicle body according to claim 4, wherein the reinforcing member (17) is provided at a position that is spaced apart from the gusset bulging portion (11b) in the front-rear direction, and is provided to extend linearly in a side view.

6. The rear structure of the vehicle body according to any one of claims 1 to 5 further comprising: a rear frame (14) provided to be joined to the wheelhouse inner (10) on an outer side of a rear floor panel (23) in the vehicle width direction and extend in the front-rear direction; and a second reinforcing member (15) which is provided to have a lower end portion (15b) joined to the rear frame (14) and extend upward along an inner surface of the wheelhouse inner (10), and an upper end portion (15a) of which is joined to the housing gusset (11), wherein the second reinforcing member (15) constitutes a third load transmission path through which the upward load input to the attachment portion (P1) is transmitted from a rear portion of the housing gusset (11) to the rear frame (14).

7. The rear structure of the vehicle body according to any one of claims 1 to 5 further comprising: the side panel (13) provided to join the wheelhouse inner (10) and the respective parts of the roof side rail (20) and the rear pillar (21), wherein a rear header corner portion (12), to which a rear header disposed to extend along an upper edge portion of a rear opening is joined, is provided in a joint portion between the roof side rail (20) and the rear pillar (21), the wheelhouse inner (10) has a wheelhouse bulging portion (10a) provided to bulge inwardly in the vehicle width direction and extend upward from a rear portion of the housing gusset (11), the side panel (13) has a side panel bulging portion (13a) provided to bulge outward in the vehicle width direction and connect an upper end of the wheelhouse bulging portion (10a) and the rear header corner portion (12), and the wheelhouse bulging portion (10a) and the side panel bulging portion (13a) constitute a fourth load transmission path through which the upward load input to the attachment portion (P1) is transmitted from the rear portion of the housing gusset (11) to the rear header corner portion (12).

8. The rear structure of the vehicle body according to any one of claims 1 to 7, wherein the upper end portion (17a) of the reinforcing member (17) is arranged at substantially the same height position as the attachment portion (P1) in an up-down direction.

9. The rear structure of the vehicle body according to any one of claims 1 to 8, wherein the upper end portion (17a) of the reinforcing member (17) is positioned lower than an upper end portion of the housing gusset (11) in the up-down direction.

10. The rear structure of the vehicle body according to any one of claims 1 to 9, wherein the rear cross member (16) is a framework member having a hat cross-sectional shape.
